# EUROPEAN PATENT SPECIFICATION

(11) **EP 2 352 244 B1**
(45) Date of publication and mention of the grant of the patent: **20.04.2016**
(21) Application number: 09823408.1
(22) Date of filing: 03.09.2009
(51) Int. Cl.: H04J 11/00, H04B 7/04, H04J 1/00, H04J 99/00, H04W 16/28, H04W 72/04, H04W 72/08, H04W 72/12, H04W 72/14, H04L 5/00

(54) **BASE STATION APPARATUS, USER EQUIPMENT AND METHOD IN MOBILE COMMUNICATION SYSTEM**
BASISSTATIONSGERÄT, BENUTZERAUSRÜSTUNG UND VERFAHREN FÜR EIN MOBILES KOMMUNIKATIONSSYSTEM
APPAREIL DE STATION DE BASE, ÉQUIPEMENT UTILISATEUR ET PROCÉDÉ DANS UN SYSTÈME DE COMMUNICATION MOBILE

(30) Priority: 30.10.2008 JP 2008279968
(43) Date of publication of application: 03.08.2011
(73) Proprietor: NTT DOCOMO, INC., Chiyoda-ku Tokyo 100-6150 (JP)
(72) Inventor: TAOKA, Hidekazu, Tokyo 100-6150 (JP); KISHIYAMA, Yoshihisa, Tokyo 100-6150 (JP); SAWAHASHI, Mamoru, Tokyo 100-6150 (JP)
(74) Representative: Hoffmann Eitle
(86) International application number: PCT/JP2009/065433
(87) International publication number: WO 2010/050295

(56) References cited:
- '3GPP TSG RAN WG1 Meeting #54bis Rl-083685, 2008.09.29', article NTT DOCOMO: 'Support of DL Higher-Order MIMO Transmission in LTE-Advanced', pages 1 - 8, XP050317032
- YOSHIHISA KISHIYAMA ET AL.: 'OFDM o Mochiiru Evolved UTRA Kudari Link ni Okeru Hochi Channel Kosei no Kento' IEICE TECHNICAL REPORT vol. 106, no. 360, 09 November 2006, pages 83 - 87, XP008146873
- MOTOROLA: 'Common Reference Symbol Mapping/ Signaling for 8 Transmit Antennas' 3GPP TSG RANI #54 RL-083224 18 August 2008, pages 1 - 5, XP050316638
- NORTEL NETWORKS: 'RS design considerations for high-order MIMO in LTE-A' TSG-RAN1 #54 RL-083157 18 August 2008, pages 1 - 6, XP002561739
- '3GPP TSG-RAN Working Group 1 Meeting #54bis Rl-083869, 2008.09.29', article NORTEL ET AL.: 'Design Consideration for Higher-order MIMO in LTE-advanced', pages 1 - 8, XP050317183
- TEXAS INSTRUMENTS: 'Common Reference Symbol Mapping/Signaling for 8 Transmit Antenna' 3GPP TSG RANI #54BIS RL-083532 29 September 2008, pages 1 - 6, XP050316896
- '3GPP TSG-RAN Working Group 1 Meeting #54bis R1-083871, 2008.09.29', article NORTEL: 'Reference signal design for downlink MIMO in LTE-advanced', pages 1 - 4, XP050317185
- '3GPP TSG RAN WG1 Meeting #55bis Rl-090023, 2009.01.12', article SHARP: 'Backward compatible design of downlink reference signals in LTE-Advanced', pages 1 - 6, XP050317971
- '3GPP TSG RAN WG1 Meeting #55bis R1-090218, 2009.01.12', article LG ELECTRONICS: 'Downlink Reference Signal for Higher Order MIMO', pages 1 - 7, XP050318148

## Description

### BACKGROUND OF THE INVENTION

### 1. Field of the Invention

The present invention relates to the technical field of mobile communications, and, more particularly relates to base station apparatuses, user apparatuses, and methods in a mobile communications system in which user apparatuses with different numbers of physical antennas co-exist within the same cell.

### 2. Description of the Related Art

In the technical field of mobile communications, schemes to succeed the so-called the Third Generation are being studied by 3GPP, which is a standardization body for wideband code division multiple access (W-CDMA) schemes. More specifically, successors to the W-CDMA scheme, high-speed downlink packet access (HSDPA) scheme, high-speed uplink packet access (HSUPA) scheme, etc., include long-term revolution (LTE) systems. Moreover, as successors to the LTE system, systems such as LTE-Advanced systems or fourth-generation mobile communications systems are also being studied. A downlink radio access scheme in the LTE system is orthogonal frequency division multiple access (OFDMA). For uplink, single-carrier frequency division multiple access (SC-FDMA) is used.

In the LTE system, for downlink and for uplink, one or more resource blocks (RBs) are allocated to a user apparatus to conduct communications. The resource block indicates a frequency unit for allocating a radio resource and is used in a manner shared among a large number of user apparatuses within a system. As an example, one resource block has a bandwidth of 180 kHz, and includes 12 sub-carriers, for example. For example, 25 resource blocks are included in a system bandwidth of 5 MHz. A base station apparatus determines which user apparatus of multiple user apparatuses a resource block is allocated to for each sub-frame, which is 1 ms in the LTE system. The sub-frame may also be called a transmission time interval (TTI). Determining allocations of radio resources is called scheduling. For downlink, the base station apparatus transmits, to a user apparatus selected in the scheduling, a shared channel in one or more resource blocks. The shared channel is called a physical downlink shared channel (PDSCH). For uplink, the user apparatus selected in the scheduling transmits, to the base station apparatus, a shared channel in the one or more resource blocks. This shared channel is called a physical uplink shared channel (PUSCH).

In a communications system using the shared channels as described above, which user apparatus the shared channel is allocated to for each sub-frame needs to be reported to the user apparatus. The control channel used in this signaling is called a physical downlink control channel (PDCCH) or a downlink (DL)-L1/L2 control channel. In addition to the PDCCH, a downlink control signal may include a physical control format indicator channel (PCFICH), a physical hybrid ARQ indicator channel (PHICH), etc.

The PDCCH may include the following set of information, for example:
a downlink scheduling grant;
an uplink scheduling grant; and
a transmission power control command bit.

Downlink scheduling grant information includes information on a downlink shared channel, for example, and, more specifically, includes information on allocating a downlink resource block, information on identifying a user apparatus (UE-ID), the number of streams, information on a pre-coding vector, a data size, a modulation scheme, information on HARQ (hybrid automatic repeat request), etc.

Moreover, uplink scheduling grant information includes information on an uplink shared channel, for example, and, more specifically, includes information for allocating an uplink resource, information identifying the user apparatus (UE-ID), the data size, the modulation scheme, uplink transmission power information, information on a demodulation reference signal in an uplink MIMO (multiple input multiple output), etc.

The PCFICH is information for reporting a PDCCH format. More specifically, the number of OFDM symbols to which the PDCCH is mapped is reported in the PCFICH. In the LTE system, the number of OFDM symbols to which the PDCCH is mapped is 1, 2 or 3, the mapping being performed in order from the beginning OFDM symbol of a sub-frame.

The PHICH includes acknowledgement/non-acknowledgement information (ACK/NACK), which indicates whether retransmission is needed for the PUSCH transmitted in uplink.

For definition of terms, control signals of the PDCCH, the PCFICH and the PHICH may be defined as respectively independent channels, or the PDCCH may be defined to include the PCFICH and PHICH.

In uplink, user data (a normal data signal) and control information are transmitted using the PUSCH. Moreover, separately from the PUSCH, downlink quality information (CQI; a channel quality indicator) and PDSCH acknowledgement/non-acknowledgement information (ACK/NACK), etc., are transmitted using a physical uplink control channel (PUCCH). The CQI is used for a downlink physical shared channel scheduling process, an adaptive modulation/demodulation and channel coding process (AMCS), etc. In uplink, a random access channel (RACH) and a signal indicating a request for allocating uplink and downlink radio resources are also transmitted as needed.

The LTE system is described in Non-patent document 1, for example.

### Non-patent document

Non patent-document 1: 3GPP, TS36.211, V8.4.0, September, 2008

NTT DOCOMO: "Support of DL Higher-Order MIMO Transmission in LTE-Advanced", In: "3GPP TSG RAN WG1 Meeting #54bis R1-083685, 2008.09.29", relates to RS structure for supporting higher-order MIMO transmission with more than four antennas considering compatibility with both LTE-Advanced UEs and legacy LTE UEs in the same frequency band. In order to support higher-order MIMO channel transmission using more than four antennas (note that eight-antenna eNB is assumed hereafter), additional common RSs (CRSs) and/or dedicated RSs (DRSs) from antennas #5 to #8 are necessary to estimate the channel variation for demodulating the shared data channel and to measure the channel quality for link adaptation and handover when CRSs from antennas #1-#4 are transmitted.

MOTOROLA: "Common Reference Symbol Mapping/Signaling for 8 Transmit Antennas"; 3GPP TSG RANI #54 R1-083224, 18 August 2008, relates to common reference assemble mapping/signalling for 8 transmit antennas.

### SUMMARY OF THE INVENTION

### [Problem(s) to be solved by the Invention]

Then, in the LTE system, a MIMO transmission scheme using a maximum of four transmit antennas in downlink is used. For the MIMO transmission scheme, each of multiple physical antennas used in communications forms an independent radio propagation channel, so that it is necessary to measure a channel state for each of the physical antennas. Thus, according to the number of base station transmit antennas of 4, four types of reference signals are transmitted in downlink.

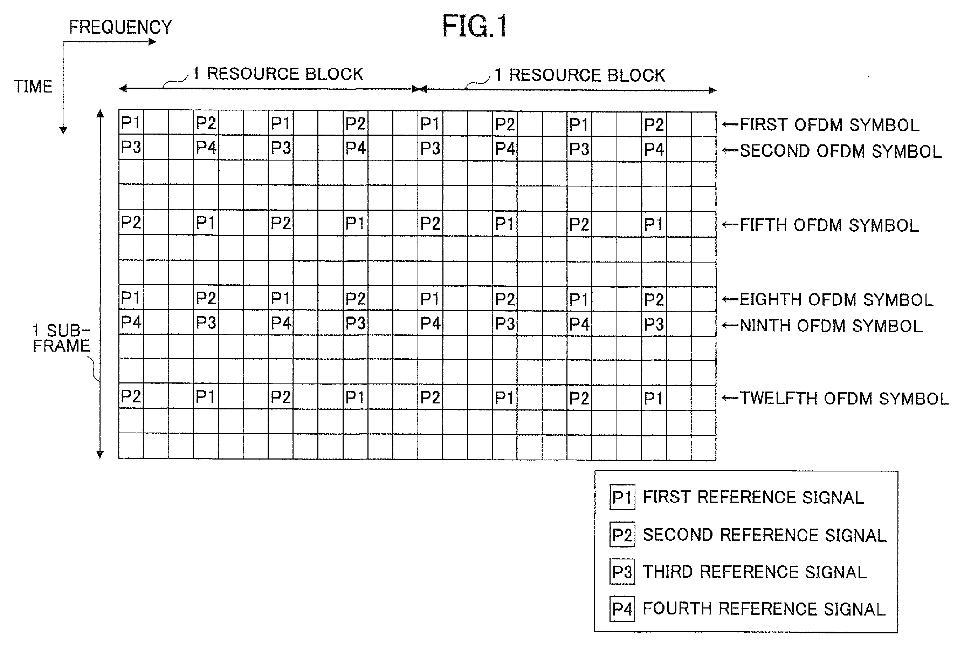

FIG. 1 indicates an exemplary mapping of reference signals in the LTE system. This is shown in chapter 6.10 "Reference Signals", etc. of the above-described non-patent document. The reference signal, which is a signal to be referred to that is known at the transmitter and the receiver, may be referred to as a pilot signal, a training signal, a known signal, etc. Based on received conditions of the reference signal, estimation of how good a radio propagation channel is and channel estimation, etc., are performed. For FIG. 1, reference signals P#1 and P#2, which are transmitted from the first and second antennas, are multiplexed to the first, fifth, eighth, and the twelfth OFDM symbols. Then, reference signals P3 and P4 transmitted from the third and fourth antennas are multiplexed to the second and the ninth OFDM symbols.

On the other hand, in a radio access to succeed the LTE like an IMT-Advanced (IMT-A) system or an LTE-Advanced (LTE-A) system, the number of transmit antennas used in the base station may increase to more than 4 (for example, the number of transmit antennas may become 8). In this case, when the base station uses eight physical antennas, it is desired that an LTE-A mobile station (a mobile station having a capability required in the LTE-A scheme) also conducts reception, distinguishing among reference signals from the respective physical antennas of the base station and measures the channel conditions corresponding to each antenna.

On the other hand, from a viewpoint of realizing a smooth transfer from the LTE system to the LTE-A system, it is desired that, in the LTE-A system, a backward compatibility is sufficiently secured. In the above example, it is necessary to secure compatibility between the LTE system, in which it is not mandatory to distinguish among more then four physical antennas, and the LTE-A system, in which it is necessary to distinguish among eight physical antennas.

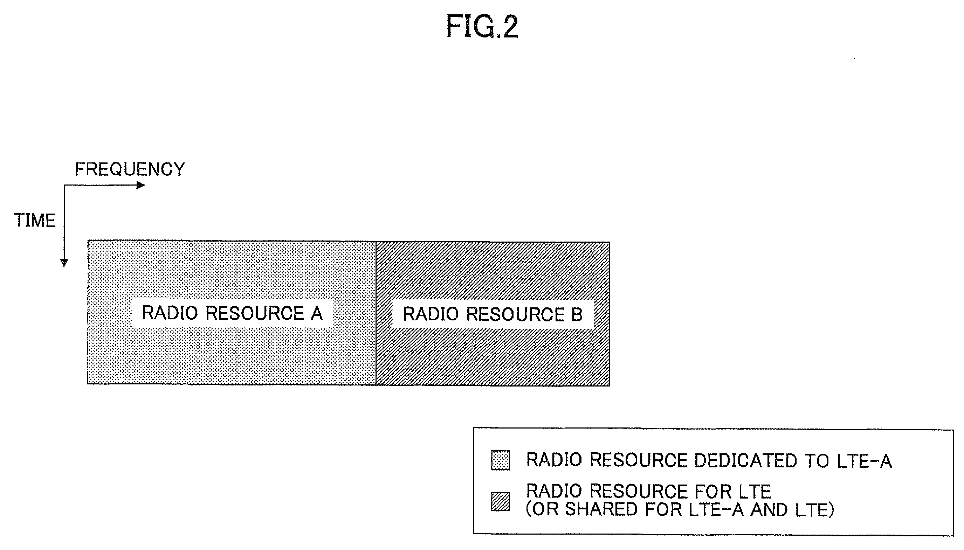

FIG. 2 shows an example of possible use of radio resources for realizing co-existence between the LTE system and the LTE-A system. The radio resources are divided in the frequency direction into a frequency band for use in communications by an LTE-A mobile station (a radio resource A), and a frequency band for use in communications by an LTE mobile station (a radio resources B) . The LTE-A mobile station conducts communications using one or more resource blocks (resource allocation units) included in the radio resource A. The LTE mobile station conducts communications using one or more resource blocks included in the radio resource B. In the radio resource A, the LTE-A mobile station conducts communications, so that the base station may multiplex reference signals to a downlink signal in an arrangement suitable for the LTE-A system. For example, resource blocks which include eight types of reference signals may be included in the radio resource A. Moreover, in the radio resource B, the LTE mobile station conducts communications, so that the base station may multiplex reference signals to a downlink signal in an arrangement suitable for the LTE system. For example, resource blocks which include four types of reference signals may be included in the radio resource B.

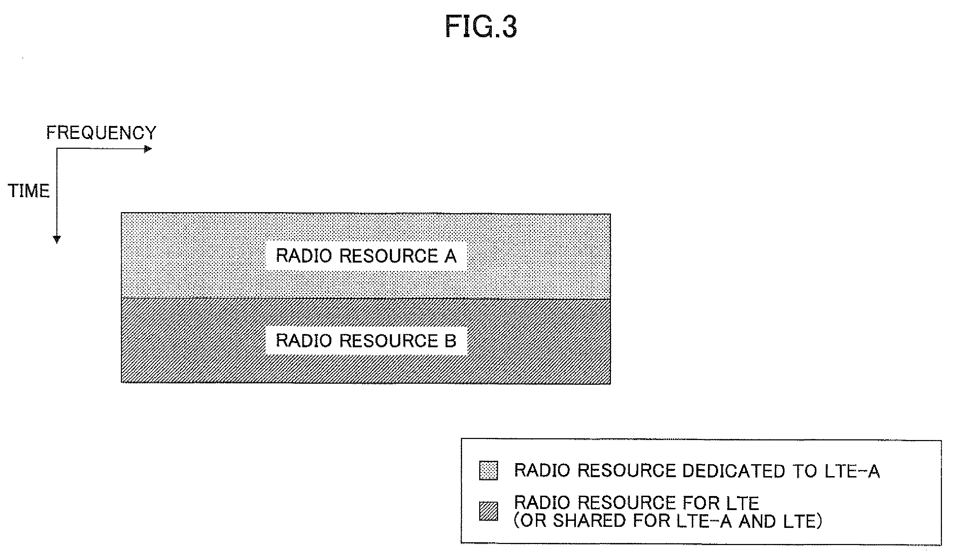

FIG. 3 shows a different example of possible use of radio resources for realizing co-existence between the LTE system and the LTE-A system. The radio resources are divided in the time direction into time periods for use in communications by the LTE-A mobile station (the radio resource A), and time periods for use in communications by the LTE mobile station (the radio resource B). Similarly, in this case, in the radio resource A, the base station multiplexes reference signals into a resource block in an arrangement suitable for the LTE-A mobile station. Moreover, in the radio resource B, the base station multiplexes reference signals into a resource block in an arrangement suitable for the LTE mobile station.

In both FIGS. 2 and 3, the radio resources are divided on a fixed basis into those for the LTE system and those for the LTE-A system. This is preferable in being able to secure radio resources in the respective systems. However, this is not necessarily preferable from a point of view of utilization of the radio resources. For example, this is because it is expected that the number of LTE-A mobile stations will not be so large in an initial stage of introducing the LTE-A system and that it is difficult to expect that the radio resource A secured for the LTE-A system will be sufficiently utilized from the beginning. It is also possible to semi-dynamically or dynamically change the border of the radio resources A and B. However, optimally maintaining at all times the location of the border yields further complications in processing, raising the concern that it is difficult.

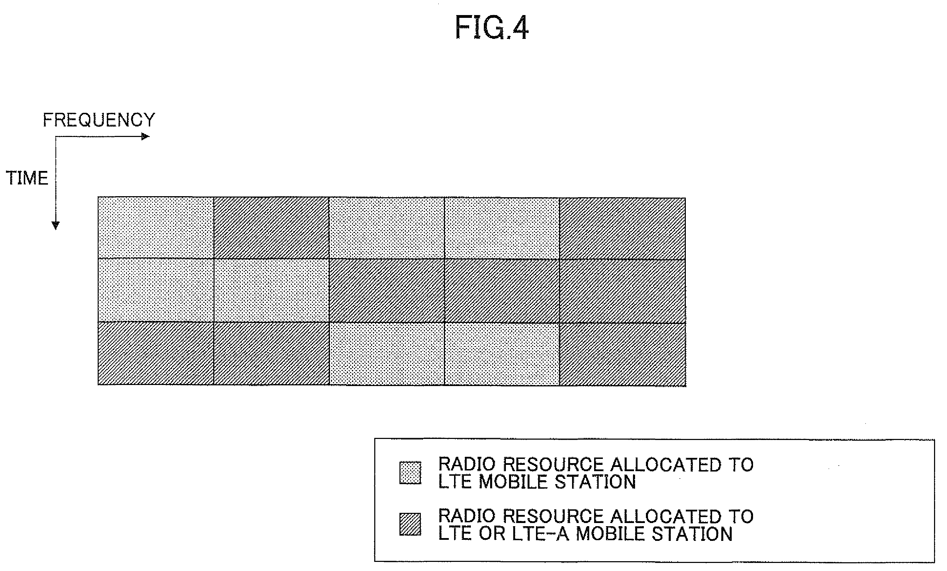

FIG. 4 shows a further different example of use of radio resources possible for realizing co-existence between the LTE system and the LTE-A system. For example, a scheduler of a base station allocates a resource block which is optimal for the LTE mobile station and the LTE-A mobile station based on channel quality information (CQI) reported from each mobile station. Therefore, the resource block A to be allocated to the LTE-A mobile station and the resource block B to be allocated to the LTE mobile station change from one sub-frame to another. Reference signals adapted to the LTE-A mobile station are multiplexed by the base station to the resource block A to be allocated to the LTE-A mobile station. For example, eight types of reference signals are multiplexed to the resource block A. Reference signals adapted to the LTE mobile station are multiplexed by the base station to the resource block B to be allocated to the LTE mobile station. For example, four types of reference signals are multiplexed to the resource block A. For an example shown in FIG. 4, radio resources for the LTE and LTE-A systems are not predetermined, so that it is possible to effectively deal with the problem of concern in how the radio resources are utilized as shown in FIGS. 2 and 3. (the problem that the radio resources may not be effectively utilized.)

Now, the mobile station must report, to the base station, how good the radio propagation conditions are (CQI) regardless of whether allocation of radio resources for the shared data channel is received. In an example in FIG. 4, four types of reference signals are included in a resource block allocated to the LTE mobile station, while eight types of reference signals are included in a resource block allocated to the LTE-A mobile station. In other words, if radio resources are not allocated in downlink to any LTE-A mobile station, all of the eight types of reference signals are not transmitted, so that it becomes difficult to measure the channel conditions using the eight reference signals and to properly report the measured values to the base station. For examples shown in FIGS. 2 and 3, the radio resource A always includes eight reference signals for the LTE-A, so that such a problem does not arise, but there is a concern for degradation of usage efficiency of radio resources.

In this way, from the point of view of efficiently transmitting a reference signal, neither one of a case such that radio resources are divided on a fixed basis for the LTE system and for the LTE-A system (FIGS. 2 and 3), and a case such that radio resources are dynamically scheduled (FIG. 4) is optimal.

The problem to be solved by the present invention is to efficiently transmit a reference signal to user apparatuses with different numbers of physical antennas that reside within the same cell.

It is to be noted that not all of features and procedures described in the "problems to be solved by the invention" have been demonstrated.

### [Means for solving the Problem]

In view of the above, the present invention proposes a base station apparatus according to claim 1 and a processing method according to claim 4.

### BRIEF DESCRIPTION OF THE DRAWINGS

FIG. 1 is a diagram illustrating a mapping example of reference signals;
FIG. 2 is a diagram illustrating one example of using radio resources;
FIG. 3 is a diagram illustrating another example of using the radio resources;
FIG. 4 is a diagram illustrating a further example of using the radio resources;

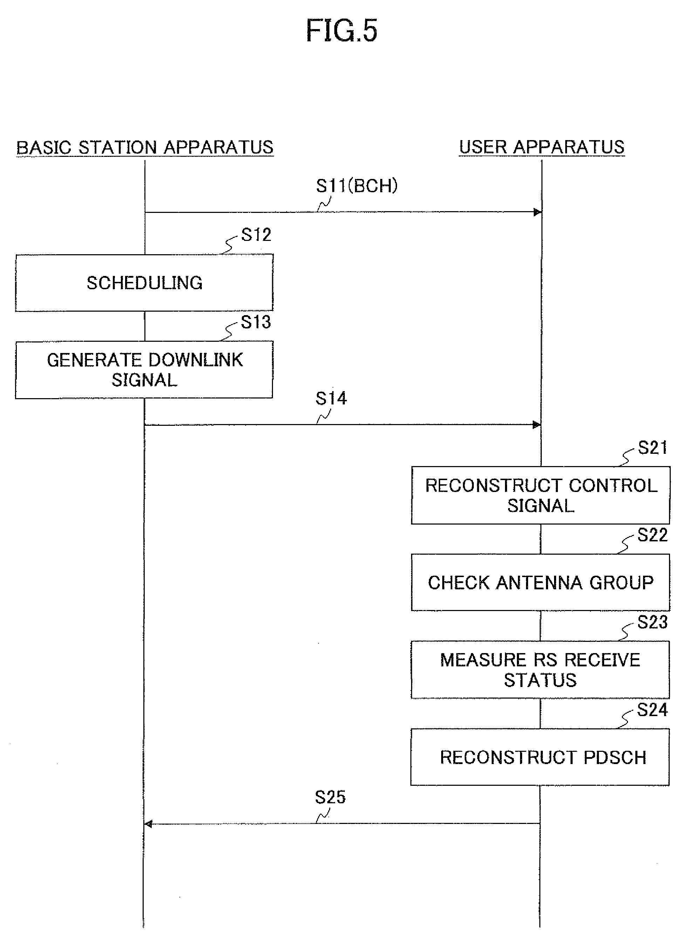

FIG. 5 is a flowchart illustrating an exemplary operation according to one embodiment of the present invention;

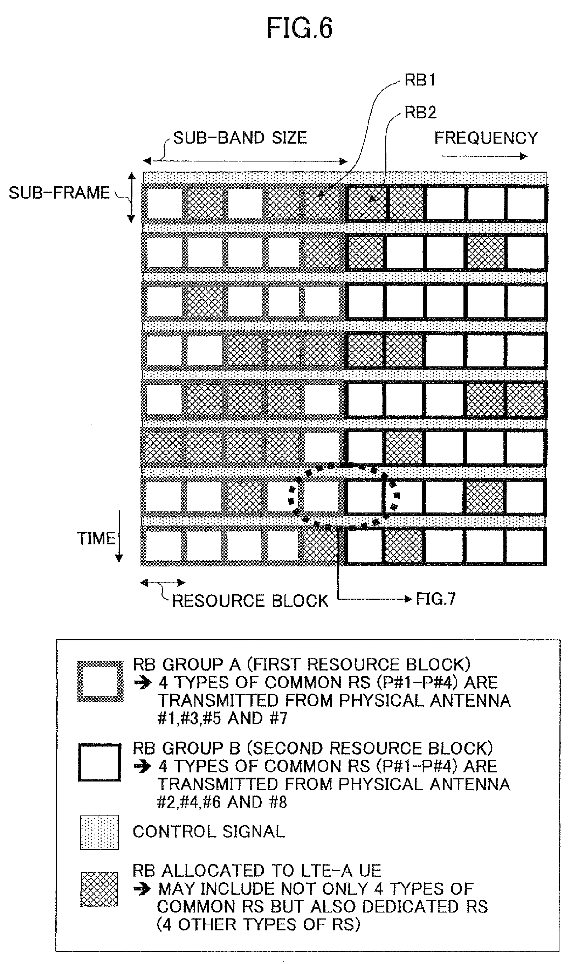

FIG. 6 is a diagram illustrating an example of a configuration (an example of changing for each sub-band) of a downlink signal;

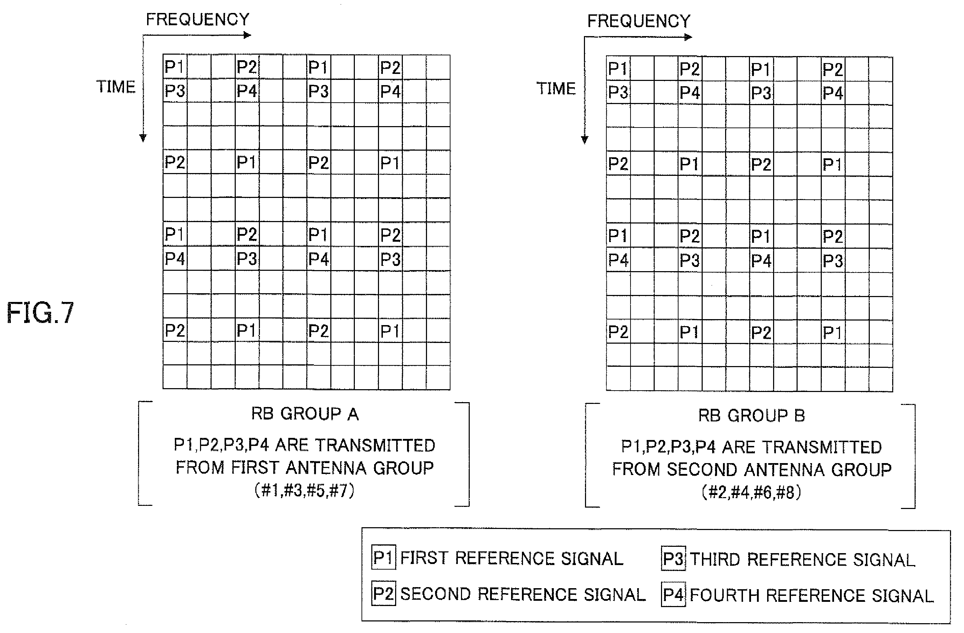

FIG. 7 is a diagram illustrating details of first and second resource blocks;

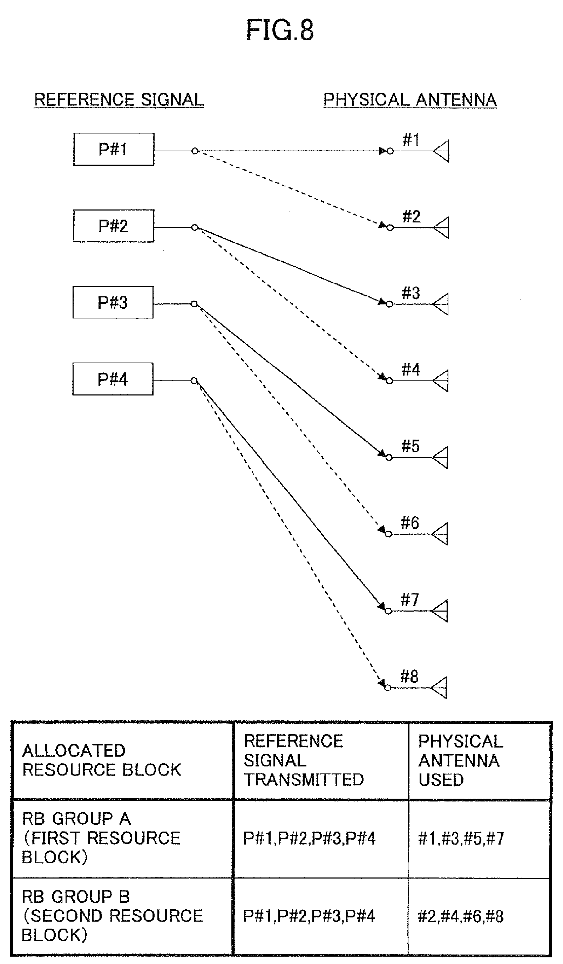

FIG. 8 is a diagram illustrating exemplary corresponding relationships between reference signals (P#1 to P#4) and physical antennas (#1-#4);

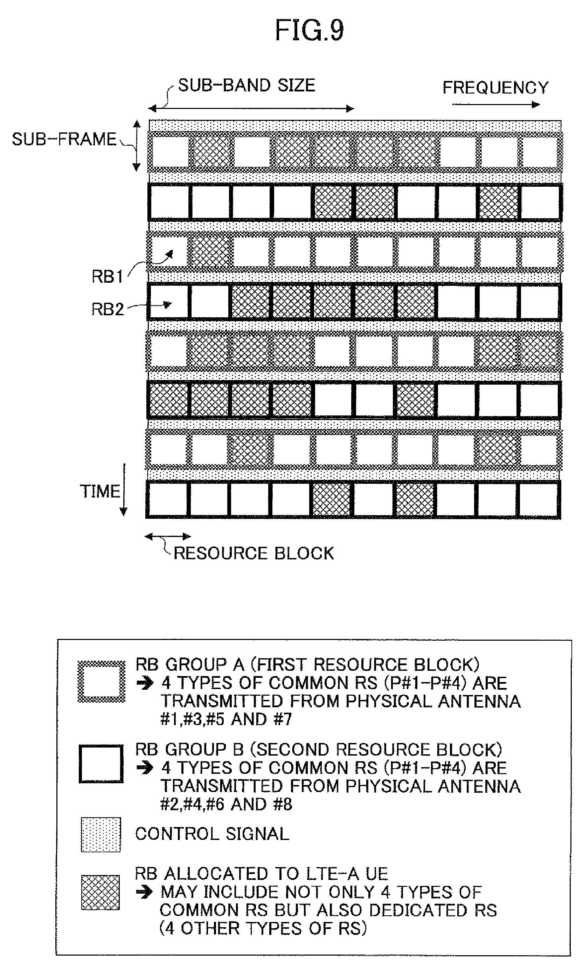

FIG. 9 is a diagram illustrating an example of configuration (an example of changing for each sub-band) of the downlink signal ;

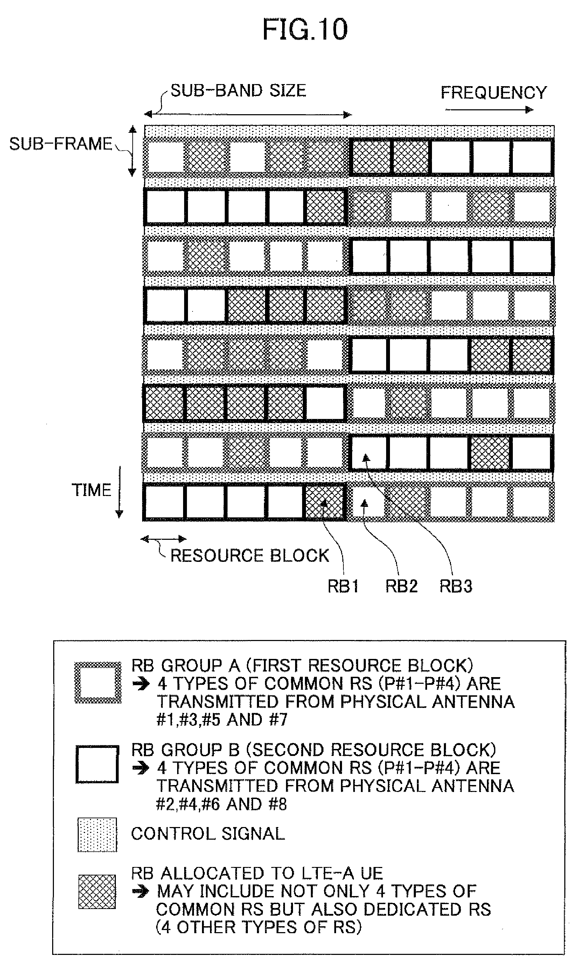

FIG. 10 is a diagram illustrating an example of a configuration (an example of changing for each sub-band and sub-frame) of a downlink signal;

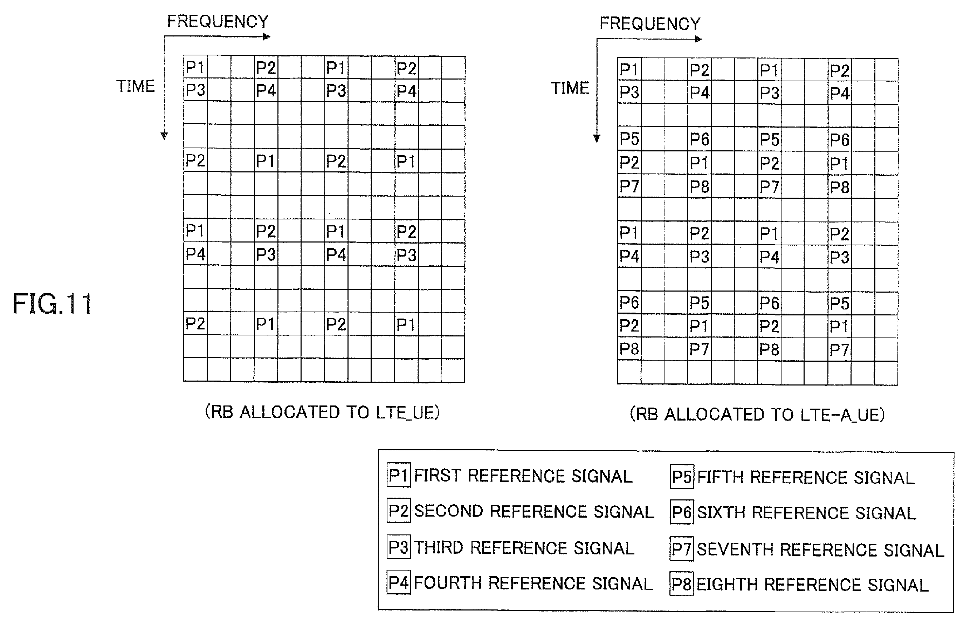

FIG. 11 is a diagram illustrating details of resource blocks allocated to user apparatuses;

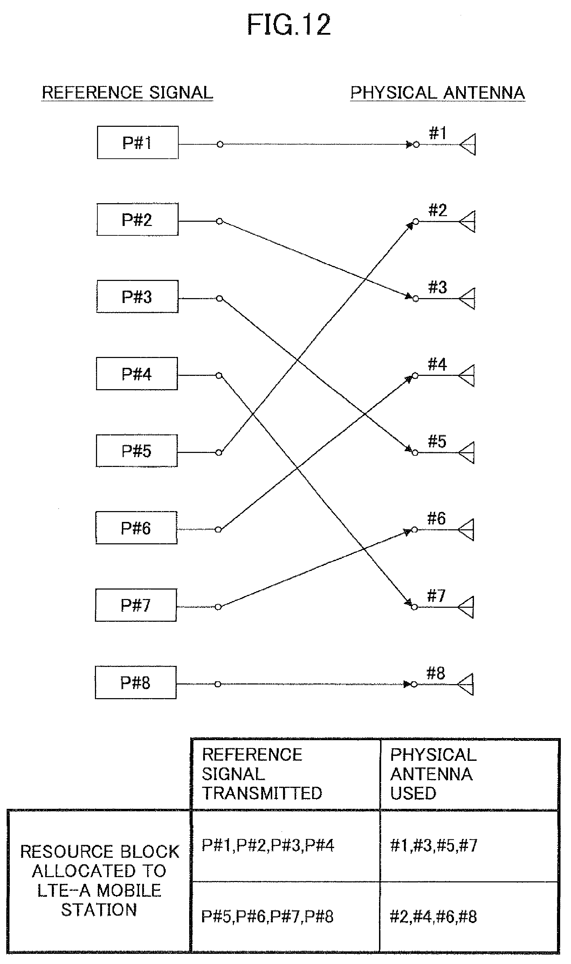

FIG. 12 is a diagram illustrating exemplary corresponding relationships between reference signals (P#1 to P#8) and physical antennas (#1-#8);

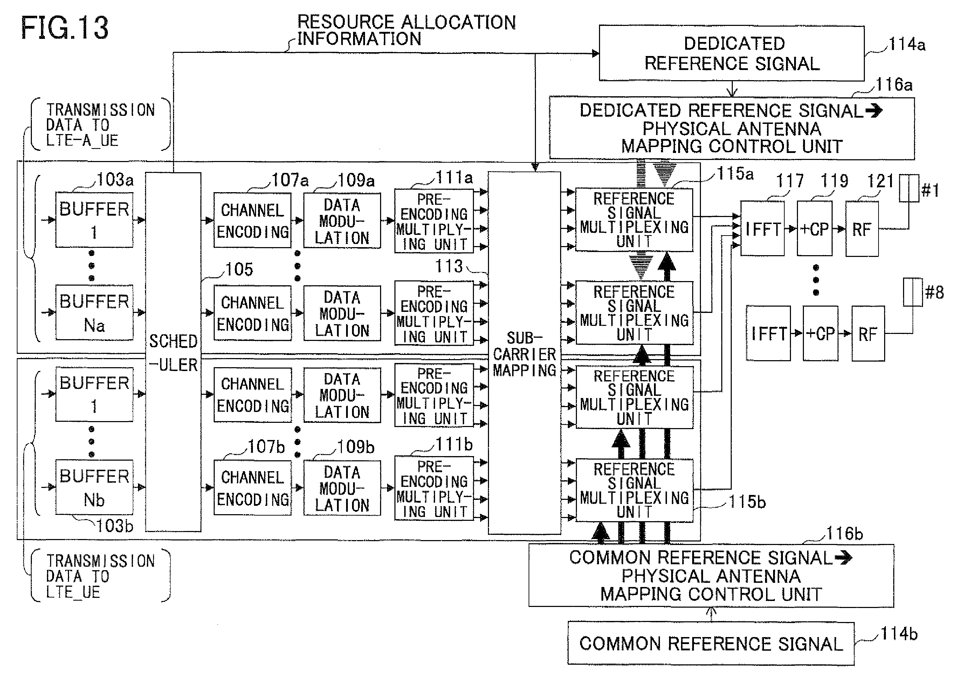

FIG. 13 is a diagram illustrating a base station apparatus according to an embodiment of the present invention; and

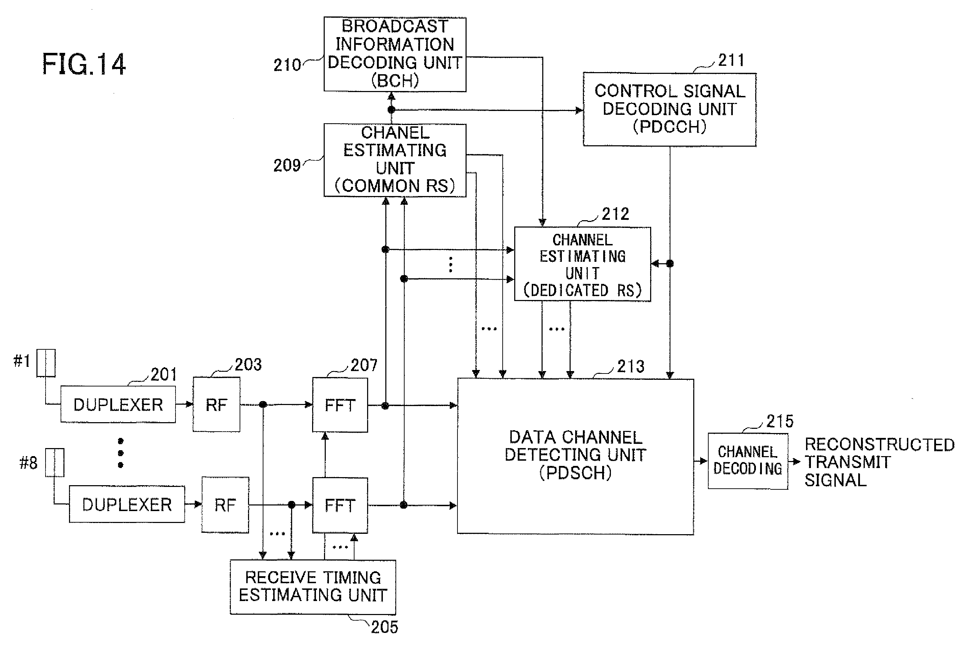

FIG. 14 is a diagram illustrating a user apparatus according to an embodiment of the present invention.

### DESCRIPTION OF THE PREFERRED EMBODIMENTS

### [Best Mode of Carrying Out the Invention]

According to one embodiment of the present invention, multiple physical antennas of a base station apparatus are divided into M (=4) (#1, #3, #5, #7) of a first group and M (=4) (#2, #4, #6, #8) of a second group. Radio resources are categorized into a resource block of an RB group A (a first resource block) and a resource block of an RB group B (a second resource block). M types of reference signals are multiplexed into the first and second resource blocks in the same arrangement pattern (FIG. 7) . Then, M (=4) types of reference signals (P#1-P#4) within the first resource block are transmitted from the physical antennas of the first group (#1, #3, #5, #7). M (=4) types of reference signals (P#1-P#4) within the second resource block are transmitted from the physical antennas (#2, #4, #6, #8) of the second group.

The LTE user apparatus uses the four types of reference signals P#1-P#4 within the resource block to measure four types of channel conditions and report the same to the base station. As the four types of reference signals are placed in the same arrangement pattern in any resource block, any resource block may be allocated to the LTE user apparatus. For the M physical antennas (#1, #3, #5, #7) of the first group, the LTE-A user apparatus measures the channel conditions using the reference signals P#1-P#4 within the first resource block. Then, for the M (=4) physical antennas (#2, #4, #6, #8) of the second group, the LTE-A user apparatus measures the channel conditions using the reference signals P#1 -P#4 within the second resource block. The LTE-A user apparatus which has eight receive antennas may measure the channel conditions for eight physical transmit antennas by recognizing that the physical transmit antennas of the reference signals P#1-P#4 are different between the first resource block and the second resource block. The LTE user apparatus which has four receive antennas does not take into account that the physical transmit antennas of the reference signals P#1-P#4 are different between the first resource block and the second resource block. In a manner which is similar for the first resource block and the second resource block, the LTE user apparatus extracts the reference signals P#1-P#4, and measures them as channel conditions for the four physical transmit antennas. In other words, while the LTE-A user apparatus mutually distinguish between the M (=4) (#1, #3, #5, #7) of the first group and the M (=4) (#2, #4, #6, #8) of the second group, the LTE user apparatus does not distinguish them.

In this way, any resource block becomes allocatable to the LTE user apparatus and the LTE-A user apparatus. Moreover, even when a radio resource is not allocated to any LTE-A user apparatus, the first and second resource blocks are always made to be provided in downlink, so that the LTE-A user apparatus may appropriately measure the channel conditions for all of the physical transmit antennas. Therefore, one embodiment of the present embodiment makes it possible to efficiently transmit a reference signal to the LTE user apparatus and the LTE-A user apparatus while maintaining backward compatibility.

The corresponding relationships between M (=4) physical antennas in the first and second groups and M (=4) types of reference signals may be reported in a broadcast channel to the user apparatus. While it is not mandatory that the reporting is in the broadcast channel from a point of view of reporting some information to the user apparatus, it is preferable to report in the broadcast channel from a point of view of efficiently reporting, to a large number of users, information which may be changed

Both the first and second resource blocks may be included in a certain temporal subframe. Both the first and second resource blocks may be obtained within one temporal sub-frame, so that this is preferable from a point of view of shortening processing time.

A predetermined multiple number of first resource blocks (and/or a predetermined multiple number of second resource blocks) may be provided, neighboring in the frequency direction. Measurement of the channel conditions by the reference signal may be performed for each resource block, but it is desirable that an average value for the multiple resource blocks are reported to the base station apparatus from a point of view of reducing the control information amount required for reporting the measured value. Therefore, in individual resource blocks to be the basis for the average value, it is preferable that the same four types of reference signals are transmitted from the same four physical antennas.

The first resource block may be included in a certain temporal sub-frame, while the second resource block may be included in a subsequent temporal sub-frame. This is preferable from a viewpoint of being able to measure the channel conditions for the same frequency band.

It may be a case that the first resource block is included in a certain temporal sub-frame, and the second resource block is included in the certain temporal sub-frame as well as a different temporal sub-frame. This is preferable from a point of view of increasing options in which the LTE-A user apparatus lines up a pair of the first and second resource blocks, and providing for a more appropriate pair.

The reference signal multiplexing unit may multiplex reference signals to a downlink signal such that M types of reference signals as well as P types of reference signals which are different from the M types of reference signals are included (typically, M=P=4). In this case, reference signals from all physical transmit antennas are included in the resource block allocated to the LTE-A user apparatus. For the resource block allocated to the LTE-A user apparatus, this is preferable from a point of view of accurately measuring the channel conditions of each physical transmit antenna.

The present invention is described from the following viewpoints:
1. Exemplary operation
2. Variation (time direction)
3. Variation (time and frequency directions)
4. Variation (dedicated reference signal)
5 Base station
6 User apparatus

### 1. Exemplary operation

Below, an exemplary operation is explained. Multiple user apparatuses and multiple base station apparatuses are included in a mobile communications system in the explanation of operations, and the base station apparatus is connected to an upper-layer station of a core network. Within the multiple user apparatuses, a user apparatus (LTE__UE) used in the LTE system and a user apparatus (LTE-A_UE) used in the LTE-A system are included. The user apparatus, which is typically a mobile station, may be a fixed station. LTE_UE uses four physical antennas to conduct communications. LTE-A_UE uses eight physical antennas to conduct communications. The base station apparatus is used in both systems in a shared manner.

FIG. 5 is a flowchart illustrating an exemplary operation according to an embodiment of the present invention. In step S11, the base station apparatus transmits a broadcast signal (BCH: broadcast channel) to multiple user apparatuses which resides within a cell. Broadcast information included in a broadcast signal (BCH) includes a system bandwidth, a system frame number, a cell ID, and other system information. In the present exemplary operation, broadcast information includes, in particular, information on the configuration of resource blocks, corresponding relationships between reference signals and physical antennas, physical antennas (#1, #2, ...) used in the base station apparatus, and reference signals (P#1, P#2, ...) transmitted in downlink. The above-described information contents may be fixed by a system, or changed periodically or aperiodically.

In step S12, the base station apparatus conducts so-called scheduling to determine allocation of a radio resource. Scheduling is conducted based on the radio propagation conditions in downlink and uplink. Scheduling may also be conducted in any appropriate algorithm known in the art. As an example, scheduling may be conducted based on a proportional fairness scheme.

In step S13, a signal transmitted in downlink is provided. In general, the downlink signal includes a control signal, a reference signal, and a shared data signal. A downlink radio resource allocation is included in the control signal as a downlink scheduling grant. An uplink radio resource allocation is included in the control signal as an uplink scheduling grant. A control signal which includes an uplink scheduling grant and a downlink scheduling grant is referred to as a physical downlink control channel (PDCCH) in the LTE system, in particular. When producing the downlink signal, the control signal, the reference signal, and the shared data signal are appropriately multiplexed from both temporal and frequency viewpoints.

FIG. 6 illustrates an exemplary configuration of a downlink signal. How eight sub-frames look in the time axis direction is shown and how ten resource blocks look in the frequency axis direction is shown. The control signal and the resource block including the shared data signal are time-multiplexed. For brevity and clarity of illustration, the reference signal and the shared data signal are not shown in detail in FIG. 6. The resource blocks are categorized into a group which is referred to as the RB group A, and a group which is referred to as the RB group B. The resource block belonging to the RB group A is also referred to as a first resource block. The resource block belonging to the RB group B is also referred to as a second resource block. In the illustrated example, five resource blocks on the low frequency side (left side) belong to the RB group A. Five resource blocks on the high frequency side (right side) belong to the RB group B. As shown, an area surrounded by a broken-line ellipse includes the first and second resource blocks, the details of this area being illustrated in FIG. 7.

FIG. 7 is a diagram illustrating details of the first and second resource blocks. As shown, the left side corresponds to the first resource block (RB group A), while the right side corresponds to the second resource block (RB group B). One resource block includes a predetermined number of OFDM symbols and a predetermined number of sub-carriers, and the number of symbols and the number of sub-carriers may be any appropriate number. As an example, one resource block may include 14 OFDM symbols over 1 ms and 12 sub-carriers over 180 KHz. As shown, the same four types of reference signals (P#1-P#4) are mapped in the same arrangement pattern to the first and second resource blocks. However, the reference signals P#1-P#4 of the first resource block (left side) and the reference signals P#1-P#4 of the second resource block (right side) are transmitted from respectively different physical antennas.

FIG. 8 shows exemplary corresponding relationships between four types of reference signals (P#1 to P#4) and physical antennas (#1-#4). The four types of reference signals (P#1-P#4) correspond to the above-described P#1-P#4. In the present example, eight physical antennas of the base station apparatus are divided into first and second groups. In the first resource block which belongs to the RB group A, four types of reference signals P#1-P#4 are respectively transmitted from the physical antennas #1, #3, #5, and #7 of the first group. In the second resource block which belongs to the RB group B, the same four types of reference signals P#1-P#4 are respectively transmitted from the physical antennas #2, #4, #6, and #8 of the second group.

In the example in FIG. 8, for brevity and clarity of explanation, it is shown that one reference signal is transmitted from one physical antenna, but this is not mandatory. For example, pre-coding may be utilized to transmit one reference signal from four physical antennas in a specific direction. At any rate, it is necessary that the same four types of reference signals are transmitted from a certain group (some four physical antennas) and a different group (different four physical antennas). The corresponding relationship shown in FIG. 8 is merely exemplary, so that any appropriate grouping of antennas and corresponding relationships may be performed. For example, the first group may include #1, #2, #3, and #4 and the second group may include #5, #6, #7, and #8 in the ascending number order. The above-described corresponding relationships may be fixed for a system, or changed periodically or aperiodically.

In step S13 in FIG. 5, resource blocks having such a configuration are built, and, in step S14, this downlink signal is transmitted. As described above, in the present exemplary operation, the user apparatus LTE_UE and the user apparatus LTE-A_UE are connected to the same base station apparatus. First, an operation for the user apparatus LTE_UE is explained, and next an operation for the user apparatus LTE-A_UE is explained.

### For LTE_UE

In step S21, a control signal within a downlink signal is extracted from a received signal, demodulated, and decoded. This control signal, which is a signal including allocation information of a radio link, corresponds to the PDCCH in the LTE system. When restoring the control signal, it is necessary to conduct channel estimation. Information on where in the resource block the reference signal is mapped to is included in broadcast information, and the user apparatus LTE_UE has already obtained the broadcast information. The user apparatus LTE_UE extracts the reference signals (P#1-P#4) within the received signal and conducts channel estimation based thereon. Utilizing results of the channel estimation, the user apparatus LTE_UE conducts channel compensation of the control signal. The user apparatus LTE_UE checks for a downlink and/or uplink scheduling grant from a channel-compensated control signal and checks for whether a radio resource is allocated to an own apparatus. For convenience of explanation, it is assumed that the user apparatus LTE_UE has been allocated a radio resource for downlink.

In step S22, a physical antenna group is checked for. More specifically, the corresponding relationships between the physical antennas of the base station apparatus and the reference signals P#1-P#4 are checked for from the broadcast information and the allocated resource block. However, for the user apparatus LTE_UE, the process of this step is not mandatory.

In step S23, based on the reference signals P#1-P#4, channel conditions for the propagation path of each reference signal are measured. More specifically, if resource blocks of the RB group A are allocated to the user apparatus LTE_UE, the channel conditions between the physical antennas #1, #3, #5 and #7 of the base station apparatus and four physical antennas of the user apparatus LTE_UE are measured. If resource blocks of the RB group B are allocated to the user apparatus LTE_UE, the channel conditions between the physical antennas #2, #4, #6 and #8 of the base station apparatus and four physical antennas of the user apparatus LTE_UE are measured. For the user apparatus LTE_UE, distinguishing among more than four physical antennas is not mandatory, so that it is not necessary to distinguish between the first and second groups of physical antennas of the base station apparatus.

In step S24, a downlink shared data signal is reproduced while utilizing results of channel estimation for each of four antennas.

In step S25, acknowledgement/non-acknowledgement (ACK/NACK) of a downlink shared data signal and/or measurement results of receiving conditions of the four antennas are transmitted to the base station apparatus.

Even if a resource block is not allocated for a downlink shared data signal of the user apparatus LTE_UE, the user apparatus LTE_UE may conduct measurement of the channel conditions using reference signals P#1-P#4 as needed, and report measurement results to the base station apparatus. For example, the user apparatus LTE_UE may measure the channel conditions for the resource block that is indicated from the base station apparatus and report the measurement results in the PUCCH.

Four types of reference signals are mapped in the same arrangement pattern in any resource block. For the user apparatus LTE UE for the LTE, distinguishing among more than four physical antennas is not mandatory, so that it is not necessary to distinguish as to whether the physical antenna of the base station apparatus is the first group (#1, #3, #5, #7) or the second group (#2, #4, #6, #8). Therefore, the user apparatus LTE_UE for the LTE may also be allocated any resource block.

### For LTE-A_UE

Next, an operation for a case of the user apparatus being LTE-A_UE is explained. The operation of step S21 is the same as for the LTE_UE. For the LTE-A_UE, in order to prepare for MIMO communications which use eight physical antennas, it is necessary to distinguish among eight physical antennas and measure the channel conditions of each physical antenna. There is a large difference on this point.

In step S22, a physical antenna group is checked for. More specifically, the corresponding relationships between the physical antennas of the base station apparatus and the reference signals P#1-P#4 are checked for from the broadcast information and the allocated resource block. If the resource block is the first resource block which belongs to the RB group A, four types of reference signals P#1-P#4 are respectively transmitted from the physical antennas #1, #3, #5, and #7 of the first group. If the resource block is the second resource block which belongs to the RB group B, the same four types of reference signals P#1-P#4 are respectively transmitted from the physical antennas #2, #4, #6, and #8 of the second group.

If the user apparatus LTE-A_UE is allocated both RB group A and RB group B resource blocks, received conditions of the four types of reference signals P#1-P#4 within the resource block of each group may be measured to measure the channel conditions on the physical antennas #1, #3, #5, and #7, and the channel conditions on the physical antennas #2, #4, #6, and #8.

If the resource block allocated to the user apparatus LTE-A_UE belongs only to the RB block A (for example, RB1), the reference signals P#1-P#4, which are extracted from the resource block, indicate the channel conditions for the physical antennas #1, #3, #5, and #7 of the base station apparatus. In step S23, the received conditions for these physical antennas are measured. The user apparatus LTE-A_UE must also provide for the channel conditions for the different physical antennas (#2, #4, #6, #8). Then, the user apparatus LTE-A_UE extracts a reference signal of a resource block (RB2, for example) of the RB group B that is closest to the resource block being allocated (RB1 in the present example) . The reference signals P#1-P#4 of the resource block which belong to the RB group B are transmitted from the physical antenna #2, #4, #6, and #8, so that received conditions of these reference signals may be measured to measure the channel conditions for the physical antennas #2, #4, #6, and #8. This measured value, which is not related to the allocated resource block is an approximate channel estimated value. Thus, the user apparatus LTE-A_UE should select a resource block of the RB group B that is closest to the allocated resource block (which belongs to the RB group A in the present example). In addition to or as an alternative to selecting a resource block which is as close as possible, the measured value of the received conditions of the reference signal may be interpolated.
The interpolation may be extrapolation or intrapolation.

When the resource block which is allocated the user apparatus LTE-A_UE belongs only to the RB group B, the four types of reference signals P#1-P#4 are respectively transmitted from the physical antennas #2, #4, #6, and #8 of the second group. In a manner similar to the above, the user apparatus LTE-A_UE extracts a reference signal of a resource block of the RB group A that is closest to the allocated resource block to measure the channel conditions on eight physical antennas.

In step S24, a downlink shared data signal is reproduced while utilizing the channel estimation result for each of eight antennas.

In step S25, acknowledgement/non-acknowledgement (ACK/NACK) of a downlink shared data signal and/or measurement results of receiving conditions of eight antennas are transmitted to the base station apparatus.

Even if a resource block is not allocated for a downlink shared data signal of the user apparatus LTE_UE, the user apparatus LTE_UE may conduct measurement of the channel conditions using the reference signals P#1-P#4 as needed, and report the measured results to the base station apparatus. For example, the user apparatus LTE_UE may measure the channel conditions for the resource block that is indicated from the base station apparatus and report the measurement results in the PUCCH.

Four types of reference signals are mapped in the same arrangement pattern in any resource block. The control signal is demodulated using this reference signal. Thus, for the control signal, both the user apparatus for the LTE and the user apparatus for the LTE-A may restore the control signal with the same procedure. Moreover, the user apparatus LTE-A_UE for the LTE-A may extract a reference signal from at least one resource block of the RB group A and at least one resource block of the RB group B to measure radio channel conditions on all of eight physical antennas. Thus, any resource block may be allocated to the LTE_UE and the LTE-A UE.

Reporting of the channel conditions for each physical antenna may be performed for each resource block, but, from a viewpoint of saving the control information amount required for the reporting, the average value for a number of resource blocks may be reported. Moreover, of a predetermined number of resource blocks, individual values or a total value thereof for a predetermined number of highest quality resource blocks may be reported to the base station apparatus. In an example shown in FIG. 6, one sub-band group (resource block group) may be formed by five resource blocks, so that the channel conditions may be reported for each sub-band group (needless to say, reporting is conducted for each physical antenna).

In FIG. 6, the RB groups A and B are changed for each sub-band size within the same sub-frame. Both the reference signal from the physical antennas (#1, #3, #5, #7) of the first group and the reference signal from the physical antennas (#1, #3, #5, #7) of the second group may be obtained within one sub-frame. Thus, the example shown is preferable in that the user apparatus LTE-A_UE for the LTE-A may speedily measure the channel conditions.

### 2. Variation (temporal direction)

The exemplary configuration of the downlink signal is not limited to what is shown in FIG. 6, so that various exemplary configurations are possible. FIG. 9 shows an example such that the downlink signal configuration is changed for each sub-frame. For this example, the corresponding relationships of the arrangement pattern of the reference signals within the resource block and the corresponding base station physical antennas are all the same if the sub-frames are the same. This is preferable from a viewpoint of simplifying signal processing (alleviating burdens of generating the downlink signal) . The user apparatus for the LTE-A utilizes the resource block of a certain sub-frame and/or the resource block of a preceding and/or subsequent sub-frame to measure the channel conditions. While this consumes at least two sub-frame periods for measurement, it is preferable in that it may measure the same frequency band (shown in RB1 and RB2) for antennas of the first group and antennas of the second group. When the temporal change in the channel conditions is small, for example, for a user which only moves at low speed, the exemplary configuration shown is preferable.

### 3. Variation (time and frequency directions)

FIG. 10 shows an example such that the downlink signal configuration is changed for each sub-band and for each sub-frame. This example is a combination of an example shown in FIG. 6 and an example shown in FIG. 9, so that it is preferable in that at least the described advantageous effects are obtained. Moreover, resource blocks of different RB groups are obtained from the same sub-frame and also from preceding and following sub-frames. Thus, for the user apparatus LTE-A_UE for LTE-A, it is preferable in that options of appropriate resource blocks of different RB groups increase. For example, for the RB1 in FIG. 10, appropriate resource blocks of different RB groups exist not only within the sub-frame, but also in a preceding sub-frame, such as RB3.

How the resource blocks of different RB groups are arranged within the downlink signal is not limited to what is shown, so that any appropriate arrangement may be used. For example, as in FIGS. 6 and 10, the RB group may be changed not only for each sub-band but also for each set of multiple sub-bands, and it may be changed for the number of different resource blocks that is different from the sub-band. Similarly, the RB group may be changed not only for each sub-frame but also for each of multiple sub-frames.

### 4. Variation (dedicated reference signal)

In the above-described example, the same reference signals P#1-P#4 have been transmitted in any resource block of the RB groups A and B. In this way, any resource block may become allocatable to the LTE user apparatus. Instead, the LTE-A user apparatus had to extract reference signals P#1-P#4 from at least two resource blocks of different RB groups, and estimate the channel conditions for the eight antennas. If the resource blocks being allocated to the LTE-A user apparatus all belong to the same RB group, the user apparatus LTE-A_UE has to select a resource block not being allocated (a resource block belonging to a different RB group) and estimate channel conditions for the remaining antennas using a reference signal extracted therefrom. Degradation of the channel estimation accuracy is of concern in that a resource block which is different from the resource block being actually allocated is used.

On the other hand, when scheduling the radio resource, the base station apparatus may know which user apparatus belongs to the LTE system and which user apparatus belongs to the LTE-A system.

Thus, in the present variation, when the base station apparatus allocates a resource block to an LTE user apparatus, the base station apparatus includes in the resource block four types of reference signals P#1-P#4 which are common to all users. Moreover, when the base station apparatus allocates a resource block to the LTE-A user apparatus, the base station apparatus includes in the resource block not only four types of reference signals P#1-P#4 common to all users, but also reference signals P#5-P#8 which are specific to the LTE-A user.

FIG. 11 shows a resource block allocated to the LTE user apparatus (left side) and a resource block allocated to the LTE-A user apparatus (right side). The resource block on the left side is the same as what is shown on the left side in FIG. 7. The resource block (FIG. 11 right side) allocated to the user apparatus of the LTE-A system includes not only four types of reference signals P#1-P#4 which are common to all users, but also reference signals P#5-P#8 which are specific to the LTE-A system user. It is noted that arrangement patterns of common reference signals P#1-P#4 are maintained in the same manner between the left and the right in FIG. 11.

FIG. 12 illustrates exemplary corresponding relationships between reference signals (P#1-P#8) and physical antennas (#1-#8). In the example shown, the reference signals P#1, P#2, P#3, P#4 which are common to all users are respectively transmitted from the physical antennas #1, #3, #5, #7 of the first group. The reference signals P#5, P#6, P#7, P#8, which are specific to the LTE-A user, are respectively transmitted from physical antennas #2, #4, #6, #8 of the second group. The corresponding relationship shown in FIG, 12 is merely exemplary, so that any appropriate grouping of antennas and corresponding relationships may be performed. For example, the first group may include #1, #2, #3, and #4 and the second group may include #5, #6, #7, and #8 in the ascending number order The above-described corresponding relationships may be fixed by a system, or changed periodically or aperiodically.

If a resource block as shown on the right side of FIG. 11 is allocated to the user apparatus of the LTE-A system, channel conditions for the eight antennas may be measured from reference signals P#1-P#8 within the resource block. Thus, the present variation is preferable from a viewpoint of increasing the measurement accuracy of the channel conditions.

### 5. Base station

FIG. 13 shows a base station apparatus according to an embodiment of the present invention. The base station apparatus has a signal processing unit for the LTE user apparatus and a signal processing unit for the LTE-A user apparatus.

The signal processing unit for the LTE apparatus includes a buffer 103b, a channel encoding unit 107b, a data modulation unit 109b, a pre-encoding multiplexing unit 111b, a common reference signal generating unit 114b, a reference signal multiplying unit 115b, and a mapping control unit 116b.

The signal processing unit for the LTE-A user apparatus similarly includes a buffer 103a, a channel encoding unit 107a, a data modulation unit 109a, a pre-encoding multiplying unit 111a, a dedicated reference signal generating unit 114a, a reference signal multiplexing unit 115a, and a mapping control unit 116a.

The scheduler 105 and the sub-carrier mapping unit 113 are used in common by the signal processing units for the LTE user apparatus and for the LTE-A user apparatus.

Moreover, for each of the eight physical antennas, the base station apparatus includes an inverse fast Fourier transformation unit 117, a cyclic prefix adding unit 119, and a radio frequency (RF) unit 121. While the base station apparatus includes eight transmit antennas, the number of antennas may be no less than eight. While the base station apparatus includes eight transmit antennas, the number of antennas may be no less than eight.

The buffers 103b for the LTE user apparatus respectively store data for transmitting to Nb LTE user apparatuses within a cell. The buffers 103a for the LTE-A user apparatus respectively store data for transmitting to Na LTE-A user apparatuses within a cell. The signal transmitted in downlink includes various signals including a control signal, a shared data signal, a reference signal, etc.; in the present embodiment, a relationship between the reference signal and the other signals is especially important. Thus, details of processing with respect to the control signal and the shared data signal are omitted.

The scheduler 105 manages radio resources used in downlink. A resource block is allocated to transmit data stored in buffers 103a, 103b under scheduling by the scheduler 105. Scheduling may also be conducted based on any appropriate algorithm known in the art. As an example, scheduling is conducted based on the proportional fairness scheme.

The channel encoding unit 107b for the LTE user apparatus channel encodes transmit data. The channel encoding unit 107a for the LTE-A user apparatus also channel encodes transmit data. The channel encoding rate is set by the control unit not shown. An adaptive modulation and channel encoding scheme is used, so that the channel encoding rate is appropriately changed according to the channel conditions (more specifically, CQI) of the user apparatus. As an example, the channel encoding rate may take values of 1/3, 1/16, etc. The channel encoding method may use any appropriate encoding method known in the art. As an example, channel encoding may be conducted by Turbo encoding, convolution encoding, etc.

The data modulation unit 109b for the LTE user apparatus data modulates channel encoded transmit data. The data modulation unit 109a for the LTE-A user apparatus also data modulates channel encoded transmit data. The data modulation scheme is set by the control unit not shown.

An adaptive modulation and channel encoding scheme is used, so that the data modulation scheme is appropriately changed according to the channel conditions (more specifically, CQI) of the user apparatus. For the data modulation scheme, any appropriate data modulation scheme known in the art may be used. As an example, the data modulation scheme may be BPSK, QPSK, 16QAM, 64QAM, etc.

The pre-encoding multiplying unit 111b for the LTE user apparatus multiplies a pre-encoding matrix to transmit data based on a pre-encoding matrix indicator (PMI) fed back from the LTE user apparatus. The pre-encoding multiplying unit 111a for the LTE-A user apparatus also multiplies a pre-encoding matrix to transmit data based on the pre-encoding matrix indicator (PMI) fed back from the LTE-A user apparatus. The pre-encoding matrix indicator may be any weight matrix group selected from a predetermined number of weight matrix groups. The predetermined number of weight matrix groups may be referred to as a codebook. For a cell for which pre-encoding is not mandatory, such processes related to the pre-encoding may be omitted.

The sub-carrier mapping unit 113 maps transmit data to each sub-carrier according to resource allocation information from the scheduler 103.

The common reference signal generating unit 114b generates or stores common reference signals P#1-P#4 used in common by all users within a cell. There are four types of common reference signals, but a larger number of or a smaller number of common reference signals may be provided. The common reference signal is used in common for all users within a cell, and differs from cell to cell, so that it may be referred to as a cell-specific RS (reference signal). The common reference signal may be expressed in an orthogonal code sequence or a non-orthogonal sequence. From a point of view of reducing interuser interference within an own cell, it is preferable to use an orthogonal code sequence.

The dedicated reference signal generating unit 114a generates or stores reference signals P#5-P#8 transmitted only to the LTE-A user apparatus. In the present embodiment, there are four types of dedicated reference signals, but a larger number of or a smaller number of common reference signals may be provided. The dedicated reference signal may be referred to as a user-specific reference signal (RS) since it is used specifically for the LTE-A user apparatus. The dedicated reference signal may also be expressed in an orthogonal code sequence or a non-orthogonal code sequence. From a point of view of reducing interuser interference within an own cell, it is preferable to use an orthogonal code sequence.

A mapping control unit 116b for a common reference signal provides a control signal to reference signal multiplexing units 115a, 115b based on the corresponding relationships between common reference signals P#1-P#4 and physical antennas #1-#8. This control signal indicates how a common reference signal is to be multiplexed to the resource block. As shown, it is noted that a control signal which indicates a multiplexing method of a common reference signal is provided to all reference signal multiplexing units 115a and 115b. In this way, arrangement patterns within a resource block of a common reference signal are maintained in an unchanged manner regardless of the resource block.

The mapping control unit 116a for the dedicated reference signal provides a control signal to the reference signal multiplexing unit 115a for LTE-A based on the corresponding relationships between the dedicated reference signals P#5-P#8 and the physical antennas #1-#8. This control signal indicates how a dedicated reference signal is to be multiplexed to the resource block. As shown, it is noted that a control signal which indicates how the dedicated reference signals are multiplexed is provided only to the reference signal multiplexing unit 115a for LTE-A (it is not provided to all reference signal multiplexing units). In this way, the dedicated reference signals P#5-P#8 may be mapped only for the resource block of the LTE-A user apparatus.

The reference signal multiplexing unit 115b for the LTE user apparatus multiplexes transmit data and a common reference signal according to a control signal from the mapping control unit 116b for the common reference signal. The multiplexed resource block has a configuration as shown in FIG. 7 and FIG. 11 (left side). The reference signal multiplexing unit 115a for the LTE-A user apparatus also multiplexes transmit data and a common reference signal according to a control signal from the mapping control unit 116b for the common reference signal. Moreover, the reference signal multiplexing unit 115a for the LTE-A user apparatus multiplexes transmit data and a dedicated reference signal according to a control signal from the mapping control unit 116a for the dedicated reference signal. The multiplexed resource block has a configuration as shown in FIG. 11 (right side). When the dedicated reference signal is not used, the resource block for the LTE-A user apparatus has a configuration as shown in FIG. 7 and FIG. 11 (left side).

Transmit data which include a common reference signal, and, as needed, a dedicated reference signal are processed for each physical antenna such that they are transmitted from each physical antenna. At the IFFT unit 117, the transmit data is inverse Fourier transformed into a time-domain symbol.

The cyclic prefix (+CP) adding unit 119 provides a guard interval using a portion of the beginning or the end of the symbol to be transmitted.

The radio frequency (RF) unit 121 applies processes of digital-to-analog conversion, bandwidth limiting, frequency conversion, power amplification, etc., to a guard interval-added symbol and produces a radio communications signal. The radio communications signal is wirelessly transmitted to the user apparatus from each antenna.

### 6. User apparatus

FIG. 14 shows a user apparatus. The user apparatus is a user apparatus used in the LTE-A system. As described above, the LTE user apparatus is similarly usable regardless of whether there is an LTE-A system. The user apparatus, which is typically a mobile station, may be a fixed station. The user apparatus shown has N receive antennas which correspond to N transmit antennas (for example, eight transmit antennas) of the base station. For each of the eight physical antennas, the user apparatus has a duplexer 201, a radio frequency (RF) unit 203, and a fast Fourier transformation (FFT) 207. Moreover, the user apparatus has a receive timing estimating unit 205, a channel decoding unit 215, a data channel detecting unit 213, and a channel estimating unit 212 which uses a dedicated reference signal, a control signal decoding unit 211, a broadcast information decoding unit 210, and a channel estimating unit 209 which uses a common reference signal.

The duplexer 201 controls switching of transmission and reception. For the frequency division duplexing (FDD), the duplexer may be arranged with filters, which respectively pass the transmit band and the receive band. For the time division duplexing (TDD) scheme, the duplexer may simply be arranged with a switch.

The radio frequency (RF) unit 203 performs predetermined signal processing for converting a received signal which is received via a physical antenna and a duplexer into a baseband digital signal. The signal processing may include, for example, power amplification, bandwidth limiting, analog-to-digital conversion, etc.

The receive timing estimating unit 205 estimates a received timing of the received signal. The estimating may be done with any appropriate scheme known in the art. For example, when correlation of a received OFDM symbol, and a received OFDM symbol with a delay of an effective symbol period is successively calculated, high correlation values are obtained over a period of a guard interval (CP), making it possible to estimate a symbol timing.

The FFT unit 207 performs Fourier transform on a received signal based on a received timing reported from the received timing estimating unit 205. In this way, the received signal is transformed into a frequency-domain signal.

The channel estimating unit 209 extracts common reference signals P#1-P#4 from the received signal and measures the channel conditions for each physical antenna based on a common reference signal. Using channel estimation, phase rotation amount and amplitude change amount on a propagation path are determined, and the phase rotation amount, etc., is used as a compensating amount for subsequent signal reception.

The broadcast information decoding unit 210 extracts, from a received signal, demodulates, and decodes information transmitted in a broadcast channel (BCH). The broadcast channel is transmitted from four specific physical antennas (for example, first group) of a base station apparatus. This is to make it possible for an LTE user apparatus and an LTE-A user apparatus to appropriately receive broadcast information. The broadcast information, in addition to general system information, also includes the corresponding relationship between the common reference signal and the physical antenna (for example, FIG. 8), the corresponding relationship between the dedicated reference signal and the physical antenna (for example, FIG. 12), arrangement patterns of common/dedicated reference signals, arrangement configuration of an RB group, etc. For the present invention, it is not mandatory that these information sets are included in broadcast information, so that they may be included in a different channel. Alternatively, it may be fixed in a system so as to make signaling unnecessary. From a point of view of efficiently reporting to all users while making the corresponding relationship variable, it is preferable to include it in the broadcast information.

The control signal decoding unit 211 demodulates and decodes information transmitted in a downlink control signal (especially PDCCH). The downlink control signal includes information on radio resource allocation (downlink/uplink scheduling grants), so that, if the user apparatus is allocated a radio resource for the downlink shared data signal, An MCS (data modulation scheme and channel encoding rate, etc.) and a resource block used are specified.

The channel estimating unit 212 extracts dedicated reference signals P#5-P#8 from the received signal and measures the channel conditions for each physical antenna based on a dedicated reference signal. Using channel estimation, phase rotation amount and amplitude change amount on a propagation path for physical antennas #5-#8 are determined, and the phase rotation amount, etc., is used as a compensating amount for subsequent signal reception.

When the dedicated reference signal is not used, a reference signal is extracted from at least two resource blocks with difference resource block configurations, and channel conditions of the eight antennas are measured.

The data channel detecting unit 213 utilizes the channel estimation results of the channel estimating units 209 and 212 to demodulate data. The received signal is received in a state in which signals transmitted from each physical antenna co-exist, so that it needs to be first divided into each of signals transmitted from individual physical antennas. The signal dividing may also be conducted in any appropriate algorithm known in the art. As an example, a zero forcing scheme, a minimum mean squared error (MMSE) scheme, a maximum likelihood detection (MLD) scheme, etc., may be used. A signal of each antenna after the signal division is data demodulated, where the data demodulation is performed in correspondence with a data modulation scheme performed at the transmitting side.

The channel decoding unit 215 decodes data demodulated at the data channel detecting unit 213 and reproduces a signal transmitted from the base station.

While the present invention has been explained, taking the LTE system and the LTE-A system as examples, it may be used in any appropriate conditions such that user apparatuses of different numbers of physical antennas co-exist. For example, the present invention may be applied to HSDPA/HSUPA W-CDMA, LTE, IMT-advanced, WiMAX, Wi-Fi systems, etc.

As described above, while the present invention is described with reference to specific embodiments, the respective embodiments are merely exemplary, so that a skilled person will understand variations, modifications, alternatives, replacements, etc. While specific numerical value examples are used to facilitate understanding of the present invention, such numerical values are merely examples, so that any appropriate value may be used unless specified otherwise. A breakdown of embodiments or items is not essential to the present invention, so that matters described in two or more embodiments or items may be used in combination as needed, or matters described in a certain embodiment or item may be applied to matters described in a different embodiment or item as long as they do not contradict. For convenience of explanation, while the apparatuses according to the embodiments of the present invention are explained using functional block diagrams, such apparatuses as described above may be implemented in hardware, software, or a combination thereof. The present invention is not limited to the above embodiments, so that variations, modifications, alternatives, and replacements are included in the present invention without departing from the scope of the present invention as defined by the claims.

### [Description of Notations]

103a, 103b buffer; 105 scheduler; 107a, 107b channel encoding unit; 109a, 109b data modulation unit; 111a, 111b pre-encoding multiplying unit; 113 sub-carrier mapping unit; 114a dedicated reference signal generating unit; 114b common reference signal generating unit; 115a, 115b reference signal multiplexing unit; 117 IFFT unit; 119 CP adding unit; 121 radio frequency unit; 201 duplexer; 203 radio frequency unit; 205 received-timing estimating unit; 207 FFT unit; 209 channel estimating unit (common RS); 210 broadcast information decoding unit (BCH); 211 control signal decoding unit (PDCCH); 212 channel estimating unit (dedicated RS); 213 data channel detecting unit; 215 channel decoding unit.

## Claims

1. A base station apparatus comprising:
a first antenna group corresponding to a first reference signal group;
a second antenna group corresponding to a second reference signal group;
a reference signal multiplexing unit configured to multiplex two or more reference signals of the first reference signal group on each of resource blocks of a downlink signal at a same pattern for a first-type user equipment and a second-type user equipment, and multiplex two or more reference signals of the second reference signal group on a certain resource block allocated to the second-type user equipment among said resource blocks such that the reference signals of the second reference signal group are arranged in same sub-carriers on which the reference signals of the first reference signal group are multiplexed and at different OFDM symbols on which the reference signals of the first reference signal group are not multiplexed; and
a transmitting unit configured to transmit the downlink signal using the first antenna group and the second antenna group, the downlink signal including a resource block in which the first reference signal group is multiplexed but the second reference signal group is not multiplexed, and a resource block in which both the first reference signal group and the second reference signal group are multiplexed,
wherein the second-type user equipment is capable of communicating using antennas greater than the number of antennas of the first antenna group, and
wherein which resource block is allocated as said certain resource block to the second-type user equipment is determined on a subframe-by-subframe basis.

2. The base station apparatus according to claim 1, wherein the downlink signal includes the first reference signal group, the second reference signal group, a shared data signal, and a control signal indicating resource block allocation information for the shared data signal.

3. The base station apparatus according to claim 1 or 2, wherein corresponding relationships between the first reference signal group and the first antenna group and between the second reference signal group and the second antenna group are changed periodically or non-periodically.

4. A processing method executed by a base station apparatus having a first antenna group corresponding to a first reference signal group and a second antenna group corresponding to a second reference signal group, the method comprising:
multiplexing two or more reference signals of the first reference signal group on each of resource blocks of a downlink signal at a same pattern for a first-type user equipment and a second-type user equipment,
multiplex two or more reference signals of the second reference signal group on a certain resource block allocated to the second-type user equipment among said resource blocks such that the reference signals of the second reference signal group are arranged in same sub-carriers on which the reference signals of the first reference signal group are multiplexed and at different OFDM symbols on which the reference signals of the first reference signal group are not multiplexed, the second-type user equipment being capable of wireless communication using antennas greater than the number of antennas of the first antenna group; and
a transmitting the downlink signal using the first antenna group and the second antenna group,
wherein which resource block is allocated as said certain resource block to the second-type user equipment is determined on a subframe-by-subframe basis.

5. The processing method according to claim 4, wherein the downlink signal includes the first reference signal group, the second reference signal group, a shared data signal, and a control signal indicating resource block allocation information for the shared data signal.

6. The processing method according to claim 4 or 5, wherein corresponding relationships between the first reference signal group and the first antenna group and between the second reference signal group and the second antenna group are changed periodically or non-periodically.

## Patentansprüche

1. Eine Basisstationsvorrichtung, umfassend:
eine erste Antennengruppe, zugehörend zu einer ersten Referenzsignalgruppe;
eine zweite Antennengruppe, zugehörend zu einer zweiten Referenzsignalgruppe;
eine Referenzsignal-Multiplexeinheit, ausgebildet zum Multiplexen von zwei oder mehr Referenzsignalen der ersten Referenzsignalgruppe auf einen jeden von Ressourcenblöcken eines Downlinksignals mit einem identischen Muster für einen ersten Typ eines Anwendergeräts und einen zweiten Typ eines Anwendergeräts und zum Multiplexen von zwei oder mehr Referenzsignalen der zweiten Referenzsignalgruppe auf einen bestimmten Ressourcenblock, zugeordnet zu dem zweiten Typ eines Anwendergeräts, aus den Ressourcenblöcken derart, dass die Referenzsignale der zweiten Referenzsignalgruppe angeordnet sind in identischen Sub-Trägern, auf welchen die Referenzsignale der ersten Referenzsignalgruppe gemultiplext sind, und bei unterschiedlichen OFDM-Symbolen, auf welchen die Referenzsignale der ersten Referenzsignalgruppe nicht gemultiplext sind; und
eine Übertragungseinheit, ausgebildet zum Übertragen des Downlinksignals unter Verwendung der ersten Antennengruppe und der zweiten Antennengruppe, wobei das Downlinksignal einen Ressourcenblock umfasst, in welchen die erste Referenzsignalgruppe gemultiplext ist, aber die zweite Referenzsignalgruppe nicht gemultiplext ist, und einen Ressourcenblock, in welchen sowohl die erste Referenzsignalgruppe als auch die zweite Referenzsignalgruppe gemultiplext sind,
wobei der zweite Typ eines Anwendergeräts zum Kommunizieren unter Verwendung von Antennen größer als die Anzahl von Antennen der ersten Antennengruppe geeignet ist, und
wobei, welcher Ressourcenblock als der bestimmte Ressourcenblock zu dem zweiten Typ eines Anwendergeräts zugeordnet wird, auf einer Subframe-für-Subframe-Basis bestimmt wird.

2. Basisstationsvorrichtung gemäß Anspruch 1, wobei das Downlinksignal die erste Referenzsignalgruppe, die zweite Referenzsignalgruppe, ein gemeinsames Datensignal und ein Steuersignal, welches Ressourcenblock-Zuordnungsinformationen für das gemeinsame Datensignal angibt, umfasst.

3. Basisstationsvorrichtung gemäß Anspruch 1 oder 2, wobei zugehörige Beziehungen zwischen der ersten Referenzsignalgruppe und der ersten Antennengruppe und zwischen der zweiten Referenzsignalgruppe und der zweiten Antennengruppe periodisch oder nicht-periodisch geändert werden.

4. Ein Verarbeitungsverfahren, ausgeführt durch eine Basisstationsvorrichtung mit einer zu einer ersten Referenzsignalgruppe gehörenden ersten Antennengruppe und einer zu einer zweiten Referenzsignalgruppe gehörenden zweiten Antennengruppe, wobei das Verfahren umfasst:
Multiplexen von zwei oder mehr Referenzsignalen der ersten Referenzsignalgruppe auf einen jeden von Ressourcenblocks eines Downlinksignals mit einem identischen Muster für einen ersten Typ eines Anwendergeräts und einen zweiten Typ eines Anwendergeräts,
Multiplexen von zwei oder mehr Referenzsignalen der zweiten Referenzsignalgruppe auf einen bestimmten Ressourcenblock, zugeordnet zu dem zweiten Typ eines Anwendergeräts aus den Ressourcenblöcken derart, dass die Referenzsignale der zweiten Referenzsignalgruppe angeordnet sind in identischen Sub-Trägern, auf welche die Referenzsignale der ersten Referenzsignalgruppe gemultiplext sind, und bei unterschiedlichen OFDM-Symbolen, auf welche die Referenzsignale der ersten Referenzsignalgruppe nicht gemultiplext sind, wobei der zweite Typ eines Anwendergeräts zur drahtlosen Kommunikation unter Verwendung von Antennen größer als die Anzahl von Antennen der ersten Antennengruppe geeignet ist; und
ein Übertragen des Downlinksignals unter Verwendung der ersten Antennengruppe und der zweiten Antennengruppe,
wobei, welcher Ressourcenblock als der bestimmte Ressourcenblock zu dem zweiten Typ eines Anwendergeräts zugeordnet wird, auf einer Subframe-für-Subframe-Basis bestimmt wird.

5. Verarbeitungsverfahren gemäß Anspruch 4, wobei das Downlinksignal die erste Referenzsignalgruppe, die zweite Referenzsignalgruppe, ein gemeinsames Datensignal und ein Steuersignal, welches Ressourcenblock-Zuordnungsinformationen für das gemeinsame Datensignal angibt, umfasst.

6. Verarbeitungsverfahren gemäß Anspruch 4 oder 5, wobei zugehörige Beziehungen zwischen der ersten Referenzsignalgruppe und der ersten Antennengruppe und zwischen der zweiten Referenzsignalgruppe und der zweiten Antennengruppe periodisch oder nicht-periodisch geändert werden.

## Revendications

1. Appareil de station de base comprenant :
un premier groupe d'antennes correspondant à un premier groupe de signaux de référence ;
un deuxième groupe d'antennes correspondant à un deuxième groupe de signaux de référence ;
une unité de multiplexage de signaux de référence configurée pour multiplexer deux signaux de référence ou plus du premier groupe de signaux de référence sur chacun de blocs de ressources d'un signal de liaison descendante au niveau d'un même schéma pour un équipement utilisateur d'un premier type et un équipement utilisateur d'un deuxième type, et pour multiplexer deux signaux de référence ou plus du deuxième groupe de signaux de référence sur un certain bloc de ressources attribué à l'équipement utilisateur de deuxième type parmi lesdits blocs de ressources de manière que les signaux de référence du deuxième groupe de signaux de référence soient agencés dans les mêmes sous-porteuses sur lesquelles les signaux de référence du premier groupe de signaux de référence sont multiplexés et au niveau de symboles OFDM différents sur lesquels les signaux de référence du premier groupe de signaux de référence ne sont pas multiplexés ; et
une unité de transmission configurée pour transmettre le signal de liaison descendante en utilisant le premier groupe d'antennes et le deuxième groupe d'antennes, le signal de liaison descendante comprenant un bloc de ressources dans lequel le premier groupe de signaux de référence est multiplexé, tandis que le deuxième groupe de signaux de référence n'est pas multiplexé, et un bloc de ressources dans lequel à la fois le premier groupe de signaux de référence et le deuxième groupe de signaux de référence sont multiplexés,
dans lequel l'équipement utilisateur du deuxième type est capable de communiquer en utilisant des antennes en nombre supérieur au nombre d'antennes du premier groupe d'antennes, et
dans lequel le bloc de ressources qui est attribué comme ledit certain bloc de ressource à l'équipement utilisateur du deuxième type est déterminé sur une base de sous-trame par sous-trame.

2. Appareil de station de base selon la revendication 1, dans lequel le signal de liaison descendante comprend le premier groupe de signaux de référence, le deuxième groupe de signaux de référence, un signal de données partagé et un signal de commande indiquant des informations d'attribution de blocs de ressources pour le signal de données partagé.

3. Appareil de station de base selon la revendication 1 ou 2, dans lequel des relations correspondantes entre le premier groupe de signaux de référence et le premier groupe d'antennes et entre le deuxième groupe de signaux de référence et le deuxième groupe d'antennes sont changées de manière périodique ou de manière non périodique.

4. Procédé de traitement exécuté par un appareil de station de base ayant un premier groupe d'antennes correspondant à un premier groupe de signaux de référence et un deuxième groupe d'antennes correspondant à un deuxième groupe de signaux de référence, le procédé comprenant :
le multiplexage de deux signaux de référence ou plus du premier groupe de signaux de référence sur chacun des blocs de ressources d'un signal de liaison descendante au niveau d'un même schéma pour un équipement utilisateur du premier type et un équipement utilisateur du deuxième type,
le multiplexage d'au moins deux signaux de référence du deuxième groupe de signaux de référence sur un certain bloc de ressources attribué à l'équipement utilisateur du deuxième type parmi lesdits blocs de ressources de manière que les signaux de référence du deuxième groupe de signaux de référence soient agencés dans les mêmes sous-porteuses sur lesquelles les signaux de référence du premier groupe de signaux de référence sont multiplexés et au niveau de symboles OFDM différents sur lesquels les signaux de référence du premier groupe de signaux de référence ne sont pas multiplexés,
l'équipement utilisateur du deuxième type étant capable d'effectuer une communication sans fil en utilisant des antennes en nombre supérieur au nombre d'antennes du premier groupe d'antennes ; et
une transmission du signal de liaison descendante en utilisant le premier groupe d'antennes et le deuxième groupe d'antennes,
dans lequel le bloc de ressources qui est attribué comme ledit certain bloc de ressources à l'équipement utilisateur du deuxième type est déterminé sur une base de sous-trame par sous-trame.

5. Procédé de traitement selon la revendication 4, dans lequel le signal de liaison descendante comprend le premier groupe de signaux de référence, le deuxième groupe de signaux de référence, un signal de données partagé et un signal de commande indiquant des informations d'attribution de blocs de ressources pour le signal de données partagé.

6. Procédé de traitement selon la revendication 4 ou 5, dans lequel des relations correspondantes entre le premier groupe de signaux de référence et le premier groupe d'antennes et entre le deuxième groupe de signaux de référence et le deuxième groupe d'antennes sont changées de manière périodique ou de manière non périodique.
